# EUROPEAN PATENT SPECIFICATION

(11) **EP 4 240 532 B1**
(45) Date of publication and mention of the grant of the patent: **04.12.2024**
(21) Application number: 21795029.4
(22) Date of filing: 13.09.2021
(51) Int. Cl.: B03B 9/06

(54) **DEVICE FOR UTILIZATION OF PHOTOVOLTAIC PANELS**
VORRICHTUNG ZUR VERWERTUNG VON FOTOVOLTAISCHEN PANEELEN
DISPOSITIF D'UTILISATION DE PANNEAUX PHOTOVOLTAÏQUES

(30) Priority: 02.10.2020 PL 43557420
(43) Date of publication of application: 13.09.2023
(73) Proprietor: Global Recycling Solar Solutions Sp. z o. o., 15 - 540 Bialystok (PL)
(72) Inventor: BRZESKI, Arkadiusz, Lodz (PL)
(74) Representative: Dziubinska, Joanna
(86) International application number: PCT/PL2021/000065
(87) International publication number: WO 2022/071817

(56) References cited:
- EP-A2- 2 556 893
- WO-A1-2015/092734
- DE-A1- 102013 112 004

## Description

The subject of the invention is device for utilization of photovoltaic panels that have been damaged and are not suitable for further use.

Photovoltaic panels are made of various materials such as: metals, quartz glass, polypropylene or EVA film. Solar panels, which generate electricity from solar radiation, are made of a layer of quartz glass conducting UV radiation, under which photovoltaic panels are placed, usually additionally secured with a layer of EVA or polypropylene film. They are placed on a plastic support platform and the whole is enclosed most often with aluminum profiles. On the back of the panels there are connection elements e.g. a connection collector box made of plastic.

There are known methods of recovering raw materials from photovoltaic panels consisting in their manual disassembly, segregation into molds that can be processed and reused. The process begins with removing the aluminum frames and panel wiring. The partially dismantled panel rich in glass, silicon, copper and plastic is ground. Then, the individual raw materials are separated from each other by means of screens, densitometric tables and optical separators. In this way, up to 95% of valuable materials can be recovered. As presented on the website https://enerad.pl/aktualnosci/recykling-paneli-fotowoltaicznych, in other method the procedure also begins with the manual separation of glass and aluminum parts and they are transferred for melting. Then, high temperature (approx. 500° C) is used to remove plastic from the obtained elements. Finally, the heat-resistant silicon cells remain. Some of them can regain their power generation properties after appropriate chemical processes. Those which, due to their technical condition, are not suitable for this are smelted into the so-called wafers which later will be used for the production of new panels. Thin-layer panels immediately go to the mill, where they are shredded into small fractions (approx. 4-5 mm). Owing to this the glass housing break easily and can be removed. The glass recovery in this case amounts to approx. 90%. The remaining materials are separated by a rotary motion and then they are passed to cleaning and further processing. There are also known chemical methods consisting in the recovery of EVA material from panels by removing the layer of this material with solvent and then its evaporation and thickening.

Another example of a device for utilization of photovoltaic panels is known from EP2556893.

According to the invention device for utilization of photovoltaic panels is characterized by the fact that in the housing on the support platform under the hopper a grinding mill is placed under which there is a belt conveyor the outlet of which is located above the acid tank. Inside the tank there is an openwork basket which is lifted and lowered by a winch mounted above the tank. Next to the tank there is a tub with flushing agent, and above the tub there is an outlet for an air hose from the blower. Next to the tub, there is a belt conveyor, the outlet of which is located at the inlet to the heated screw conveyor and the mill outlet is located at the final processing station of the melted plastic and glass fractions.

The hose supplying air from the blower is located above the heated screw conveyor.

The support platform with the housing is built on a wheeled or crawler chassis.

The device for utilization of photovoltaic panels enable quick disposal of used photovoltaic panels at the place of their disassembly.

The entire disposal process can be carried out automatically without the need to control individual operations.

The device according to the invention is shown in a schematic drawing which shows the device in a mobile version mounted on a wheeled chassis.

As shown, on platform 3 housing 7 is placed in which all the devices for the disposal of photovoltaic panels are located. In the housing there is hopper 1, through which photovoltaic panels without aluminum profiles and wiring are fed. Under hopper 1 there is mill 14 where the thrown-in panels are cut and shredded into fine particles. From the mill 14, the ground particles are collected by belt conveyor 2 from which they are dropped into openwork basket 6 suspended on ropes 5 of winches 4 and placed in tank 17 with acid, most often nitric acid. Next to the acid tank 17 there is a tub 12 with flushing liquid. After dissolving metals in the fragmented particles of the panels in acid, basket 6 is pulled upwards, then it is moved over tub 12 and lowered into it on ropes 5. After flushing the residue, after neutralizing the acid, basket 6 is raised again this time from tub 12, ground plastic particles with glass particles are dried in the air stream supplied over tub 12 through hose 8, compressed by blower 9. The air in hose 8 is heated by waste heat from screw conveyor 15. Dried particles are thrown onto belt conveyor 16, the outlet of which is located at the inlet to screw conveyor 15. The screw conveyor 15 is heated to the plastic melting point, the charge is compacted there and fed to a final processing station, in this example to mold 11 where press 10 extrudes paving slabs. The solution from tank 17 is subjected to known chemical or electrochemical treatments to recover pure metal. As platform 3 is built on wheels 13, the device can be quickly transported to the panel disassembly site and there, after the initial disassembly of removed panels, their automatic disposal can be carried out,

## Claims

1. Device for utilization of photovoltaic panels with mills crushing panels without metal fittings and wiring, wherein in the housing (7) on the support platform (3) under the hopper (1) a grinding mill (14) is placed under which there is a belt conveyor (2) the outlet of which is located above the acid tank (17), wherein, inside the tank (17) there is an openwork basket (6) which is lifted and lowered by a winch (4) mounted above the tank (17), while next to the tank (17) there is a tub (12) with flushing agent, and above the tub (12) there is an outlet for an air hose (8) from the blower (9), while next to the tub (12), there is a belt conveyor (16), the outlet of which is located at the inlet to the heated screw conveyor (15) and the mill (14) outlet is located at the final processing station of the melted plastic and glass fractions.

2. Device for utilization of photovoltaic panels according to claim 1, **characterized in that** the hose (8) supplying air from the blower (9) is located above the heated screw conveyor (15).

3. Device for utilization of photovoltaic panels according to claim 1, **characterized in that** the support platform (3) with the housing (7) is built on a wheeled or crawler chassis.

## Patentansprüche

1. Vorrichtung zur Entsorgung von Photovoltaik-Paneelen, mit Mühlen zum Zerkleinern von Paneelen ohne Metallbeschläge und Verkabelung, **dadurch gekennzeichnet, dass** eine Zerkleinerungsmühle (14) im Gehäuse (7) auf der Tragplattform (3) unter dem Trichter angeordnet ist ( 1), unter dem sich ein Förderband (2) befindet, dessen Auslass über dem Tank (17) mit Säure angebracht ist, und im Tank (17) befindet sich ein durchbrochener Korb (6), der mittels Winde (4) angehoben und abgesenkt wird und die über dem Tank (17) montiert ist, und neben dem Tank (17) befindet sich eine Badewanne (12) mit Spülmittel, und über der Badewanne (12) befindet sich ein Auslass des Rohrs (8) mit Luft aus dem Gebläse (9) und neben der Badewanne (12) befindet sich ein Förderband (16), dessen Auslass sich am Eingang des beheizten Schneckenförderers (15) und der Auslass der Mühle ( 14) befindet sich an der Endverarbeitungsstation der geschmolzenen Kunststoff- und Glasfraktionen.

2. Vorrichtung zur Entsorgung von Photovoltaik-Modulen nach Anspruch 1, **dadurch gekennzeichnet, dass** das Rohr (8), das die Luft vom Gebläse (9) zuführt, über der beheizten Förderschnecke (15) angeordnet ist.

3. Vorrichtung zur Entsorgung von Photovoltaik-Modulen nach Anspruch 1, **dadurch gekennzeichnet, dass** die Tragplattform (3) samt Gehäuse (7) auf einem Rad- oder Raupenfahrwerk aufgebaut ist.

## Revendications

1. Dispositif pour l'élimination de panneaux photovoltaïques, avec broyeurs de panneaux sans ferrures métalliques ni câblage, **caractérisé en ce qu'**un broyeur de broyage (14) est placé dans le boîtier (7) sur la plate-forme support (3), sous la trémie ( 1), sous lequel se trouve un convoyeur à bande (2), dont la sortie est placée au-dessus du réservoir (17) d'acide, et à l'intérieur du réservoir (17) se trouve un panier ajouré (6), levé et abaissé sur un treuil (4) monté au-dessus du réservoir (17), et à côté du réservoir (17) il y a une baignoire (12) avec le produit de rinçage, et au-dessus de la baignoire (12) il y a une sortie du tuyau (8) avec l'air du ventilateur (9), et à côté de la baignoire (12) se trouve un convoyeur à bande (16) dont la sortie est située à l'entrée du doseur à vis chauffé (15), et la sortie du broyeur ( 14) est situé à la station de traitement final des fractions de plastique et de verre fondues.

2. Dispositif d'élimination de panneaux photovoltaïques selon la revendication. 1, **caractérisé en ce que** la canalisation (8) alimentant en air la soufflante (9) est une vis d'alimentation chauffée (15).

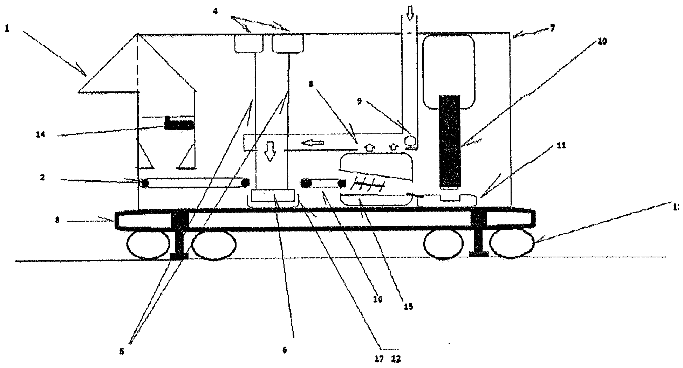

3. Veuillez utiliser des panneaux photo. 1, **caractérisé en ce que** la plate-forme de support (3) ainsi que le boîtier (7) sont construits sur un châssis à roues ou à chenilles.
